# EUROPÄISCHE PATENTANMELDUNG

(11) **EP 1 260 913 A2**
(43) Veröffentlichungstag der Anmeldung: **27.11.2002**
(21) Anmeldenummer: 02010386.7
(22) Anmeldetag: 08.05.2002
(51) Int. Cl.: G06F 17/24, G06F 17/21

(54) **Datenverarbeitungseinrichtung zur Erstellung von Druckvorlagen**

(30) Priorität: 23.05.2001 DE 10125110
(71) Anmelder: Building Systems Gesellschaft für Systementwicklung und- integration mbH, 50735 Köln (DE)
(72) Erfinder: Oldemeier, Martin R., 50670 Köln (DE); Schibilla, Frank, 50733 Köln (DE)
(74) Vertreter: von Kirschbaum, Alexander, Dipl.-Ing.

(57) **Zusammenfassung**

Eine Datenverarbeitungseinrichtung zur Erstellung von Druckvorlagen (26) weist eine Layout-Erstellungseinrichtung (10) zur Erstellung eines mindestens eine Layout-Elementengruppe (14) enthaltendes Dokumenten-Layout (12) auf. Jede Layout-Elementengruppe (14) weist mehrere Layout-Elemente (16,18) auf, die in relativen Positionen zueinander angeordnet sind. Die Größe und/oder Position der Layout-Elemente kann in Abhängigkeit vordefinierter Regeln variabel sein. Ferner ist jedes Layout-Element (16,18) über eine Zuordnungsregel mit einem Datensatz (24) einer Speichereinrichtung (22) verknüpft. Mit einer Verknüpfungseinrichtung (20) erfolgt das Erstellen der Druckvorlage (26), wobei die Verknüpfungseinrichtung (20), die den einzelnen Layout-Elementen (16,18) zugeordneten Datensätze (24) aus der Speichereinrichtung (22) ausliest und unter Beachtung der Anordnungsregeln in das Drucklayout (12) einfügt.

## Beschreibung

Die Erfindung betrifft eine Datenverarbeitungseinrichtung zur Erstellung von Druckvorlagen, insbesondere zur Erstellung von Katalogen und Prospekten.

Zur Erstellung von derartigen häufig äußerst umfangreichen Druckvorlagen werden automatisierte datenbankgestützte Verfahren eingesetzt. Bei diesen Verfahren wird einer vorgegebenen Anzahl an Layout-Vorlagen Inhalten aus den Datenbanken zugewiesen. Jede Layout-Vorlage, die beispielsweise einer Seite oder einer Doppelseite eines Katalogs oder Prospekts entspricht, enthält fest definierte Rahmen für Bild- oder Textdaten. Ferner ist in den Druckvorlagen nicht nur die Position der Rahmen, sondern auch die typographischen Anweisungen vorgegeben. Bei den typographischen Anweisungen handelt es sich beispielsweise um die Schriftgröße, die Schriftart und deren Ausrichtung bezüglich des Rahmens. Ebenso ist die Ausrichtung eines in einem Bildrahmen einfügbaren Bildes, dessen Skalierung etc. fest vorgegeben.

Aufgrund der begrenzten Anzahl an Vorlagen ist der Seitenaufbau nicht variabel. Es ist lediglich möglich, die Anzahl der Vorlagen zu erhöhen, um eine größere Vielfalt und mehr Gestaltungsmöglichkeiten bei dem Layout einer Druckvorlage, wie eines Katalogs, zu erhalten. Das nachträgliche Ändern einer Vorlage führt stets zur Erstellung einer neuen Vorlage, die in die Datenbank eingepflegt werden muss. Dies führt häufig zur Generierung einer unüberschaubaren Anzahl an Vorlagen. Hierdurch ist der Automatisierungsgrad zur Erstellung einer Druckvorlage verschlechtert. Ein hoher Automatisierungsgrad ist dann erreichbar, wenn eine geringe Anzahl und sehr einfache Layout-Vorlagen verwendet werden.

Insbesondere zur Aktualisierung einer Druckvorlage, wie beispielsweise der Änderung von Preisen, ein Ändern der Sprache und ein Austausch einzelner Produkte, sind in der Datenbank nicht nur die einzelnen Dateien, wie Text- und Bilddaten, sondern zusätzlich auch sämtliche Geometriedaten vorhanden. Jede einzelne Datei muss eindeutig mit einer Vorlage und einer Position in dieser Vorlage verbunden werden. Anstatt sämtliche Dateien in einer Datenbank zu speichern, kann diese Datenbank auch Verweise auf weitere Datenbanken oder Speichermedien aufweisen. Da sämtliche Geometriedaten sowie die typographischen Anweisungen für jede Datei in der Datenbank enthalten sind, sind die Datenbanken nur äußerst schwer vom Anwender zu pflegen. Die Datenbank enthält eine Vielzahl von Steuerzeichen, die das Auffinden und Pflegen der tatsächlichen Datenbankinhalte erschweren oder unmöglich machen. Es ist daher erforderlich, aufwendige Filtertechniken in der Datenbank zu implementieren. Bei dieser Filtertechniken werden die Steuerzeichen unterdrückt und die Datenbank kann vom Anwender wieder gepflegt werden. Das Vorsehen von Filtertechniken ist nicht nur aufwendig, sondern hat auch den Nachteil, dass die entsprechende Datenbank nicht mehr für andere Zwecke genutzt werden kann.

Aufgabe der Erfindung ist es, eine Datenverarbeitungseinrichtung zur Erstellung von Druckvorlagen zu schaffen, mit der das Erstellen von Druckvorlagen, insbesondere von umfangreichen Druckvorlagen vereinfacht ist.

Die Lösung der Aufgabe erfolgt erfindungsgemäß durch die Merkmale des Anspruchs 1.

Die erfindungsgemäße Datenverarbeitungseinrichtung weist eine Layout-Erstellungseinrichtung, eine Speichereinrichtung, wie eine Datenbank sowie eine Verknüpfungseinrichtung zum Erstellen der Druckvorlage auf. Ein wesentliches Merkmal der Erfindung besteht darin, dass zur Erstellung der Druckvorlage keine seitenbezogenen Layouts verwendet werden. Vielmehr erfolgt mit der Layout-Erstellungseinrichtung die Erstellung eines mindestens eine Layout-Elementengruppe enthaltenden Drucklayouts. Eine Layout-Elementgruppe weist erfindungsgemäß mehrere Layout-Elemente, wie Bild- und Textrahmen auf. Mehrere Bild- und Textrahmen, d.h. Layout-Elemente sind somit erfindungsgemäß zu einer Layout-Elementgruppe zusammengefasst. Die einzelnen Layout-Elemente der Layout-Elementegruppe sind in relativer Position zueinander angeordnet. Die Layout-Elemente weisen somit keine festen Positionen in der Druckvorlage auf. Ferner können die Layout-Elemente in Abhängigkeit vordefinierter Regeln hinsichtlich ihrer Größe und/oder Position variabel sein. Beispielsweise kann die Größe eines Textrahmens in Abhängigkeit des eingelesenen Textes variieren. Dies kann sodann zu einer Verschiebung anderer Layout-Elemente, die in einer relativen Position zu diesem Rahmen angeordnet sind, führen.

Ferner ist jedes Layout-Element über eine Zuordnungsregel mit einem in der Speichereinrichtung gespeicherten Datensatz verknüpft. Mit Hilfe einer Verknüpfungseinrichtung erfolgt die Erstellung der Druckvorlage. Hierzu liest die Verknüpfungseinrichtung, die den einzelnen Layout-Elementen zugeordneten Datensätze aus der Datenbank aus und führt diese in das Drucklayout ein.

Durch das Vorsehen mindestens einer, vorzugsweise mehrerer Layout-Elementgruppen erfolgt eine seitenunabhängige Erstellung eines Drucklayouts. Da die einzelnen Layout-Elemente der Layout-Elementgruppen dynamisch sein können, kann sich die Größe der einzelnen Layout-Elemente verändern. Dies führt auch zu einer Veränderung des Erscheinungsbildes der Layout-Elementengruppe. Insbesondere durch das Verschieben einzelner Layout-Elemente, beispielsweise aufgrund von Vergrößerungen anderer Layout-Elemente kann sich das Layout für den Betrachter stark verändern. Die Druckvorlage besteht somit nicht aus einzelnen starren Seiten mit fest vorgegebenen Layout-Vorlagen. Dies führt zu einer erheblich größeren Variabilität der erfindungsgemäßen Datenverarbeitungseinrichtung. Insbesondere ist das Erstellen einer Vielzahl von Layout-Vorlagen nicht erforderlich. Ebenso ist der erhebliche Nachbearbeitungsaufwand, der insbesondere bei komplexeren Druckvorlagen sehr hoch ist, stark reduziert.

Bei einer besonders bevorzugten Ausführungsform enthält nur das entsprechende Layout-Element die Zuordnungsregel. Dies hat zur Folge, dass die Zuordnungsregel ausschließlich im Drucklayout oder einer mit dieser verknüpften Datei gespeichert ist. Die Zuordnungsregel ist nicht in der Speichereinrichtung, wie der Datenbank, gespeichert. Die Datenbank weist somit keine oder zumindest nur eine stark reduzierte Anzahl an Steuerzeichen u.dgl. auf. Dies hat den erheblichen Vorteil, dass das Pflegen der Datenbank erheblich vereinfacht ist. Insbesondere ist das Vorsehen aufwendiger Filtertechniken nicht notwendig. Hierdurch verringern sich die Kosten der Datenbanken und die erforderlichen Rechnerleistungen beim Pflegen der Datenbank. Ferner ist die Datenbank, da sie frei von bestimmten druckvorlagenbezogene Steuerzeichen ist, für andere Zwecke einsetzbar.

Vorzugsweise weist jedes Layout-Element eine auf die Datenbank bezogene Anordnungsregel auf. Eine Anordnungsregel enthält beispielsweise Tabulatoren o.dgl. zur Anordnung von Text innerhalb eines Textrahmens. Vorzugsweise erfolgt das Einfügen des Datensatzes, das Drucklayout mit Hilfe der Verknüpfungseinrichtung unter Beachtung der Anordnungsregel. Die einzelnen Daten der Dateien werden somit unmittelbar beim Einlesen in das Drucklayout richtig angeordnet. Wenn die Anordnungsregel wiederum im Layout-Element enthalten ist, bzw. unmittelbar mit diesem verknüpft ist, und eine entsprechende Anordnungsregel, die im Allgemeinen typographische Daten enthält, nicht in der Datenbank in Zuordnung zu einer entsprechenden Datei gespeichert ist, sind auch derartige Steuerzeichen in der Datenbank nicht enthalten. Dies vereinfacht wiederum das Pflegen der Datenbank. Ferner sind die Nutzungsmöglichkeiten der Datenbank auch für andere Zwecke gewährleistet.

Vorzugsweise ändert sich die Größe und/oder Position der mindestens einen Layout-Elementgruppe in Abhängigkeit vordefinierter Regeln. Bei den vordefinierten Regeln kann es sich beispielsweise um die Regel handeln, dass die Größe der Layout-Elementengruppe bis zu einer Maximalgröße veränderbar ist. Eine Veränderung der Größe der Layout-Elementengruppe erfolgt beispielsweise aufgrund von Größen- und/oder Positionsänderung einzelner Layout-Elemente der Layout-Elementgruppe. Hierdurch ist die Flexibilität der Datenverarbeitungseinrichtung zur Erstellung von Druckvorlagen weiter erhöht.

Vorzugsweise weist die Layout-Erstellungseinrichtung einen Layout-Elementengruppen-Editor auf. Mit Hilfe des Layout-Elementen-Gruppen-Editors können die für eine Layout-Elementengruppe geltenden Regeln definiert werden. Beispielsweise handelt es sich hierbei um die Definition der zulässigen Größenänderung oder um die Definition der Positionsänderung. Ferner kann in einer derartigen Regel beispielsweise definiert werden, dass eine Layout-Elementgruppe stets nur am Anfang einer Seite angeordnet sein kann. Bei einer Abfolge von mehreren unterschiedlichen Layout-Elementgruppen in einem Drucklayout führt diese Regel zu einem festen Seitenumbruch, sobald diese Layout-Elementengruppe im Drucklayout auftaucht. Ferner kann in diesen Regeln für jede Layout-Elementengruppe vordefiniert werden, ob eine Layout-Elemengruppe von einer auf die nächste Seite übergreifend angeordnet sein kann oder ob die Layout-Elementgruppe stets auf einer Seite der späteren Druckvorlage angeordnet sein muss. Auch derartige Definitionen sind erfindungsgemäß vorzugsweise stets unmittelbar in dem Drucklayout oder einer mit dieser verbundenen Datei enthalten und nicht in der Datenbank definiert. Ferner können vorzugsweise in dem Layout-Elementengruppen-Editor auch Regeln definiert werden, die für sämtliche dieser Layout-Elementengruppe zugeordneten Layout-Elemente gelten. Es handelt sich hierbei um Grundregeln, die sodann nicht für jedes Layout-Element gesondert definiert werden müssen, sondern einmal für alle Layout-Elemente einer Layout-Elementengruppe definiert sind.

Vorzugsweise weist die Layout-Erstellungseinrichtung einen Layout-Elemente-Generator zum Erzeugen der unterschiedlichen Layout-Elemente auf. Mit dem Layout-Elemente-Generator kann somit beispielsweise ein Bild oder Textrahmen, d.h. ein Layout-Element einer Layout-Elementengruppe erzeugt werden. Dies erfolgt beispielsweise mit Hilfe der Maus oder durch Dateneingabe über eine Eingabemaske. Hierbei wird vorzugsweise auch eine Ausgangsgröße, die ggf. in Abhängigkeit des Inhalts des Rahmens variabel sein kann, vorgegeben. Ferner dient der Layout-Elemente-Generator zur Definition der relativen Lage der Layout-Elemente zueinander. Dies kann wiederum unmittelbar auf einem Computerbildschirm mit Hilfe einer Maus und/oder durch Dateneingabe in eine Eingabemaske erfolgen.

Vorzugsweise weist die Layout-Erstellungseinrichtung einen Layout-Elemente-Editor zur Definition der für ein Layout-Element geltenden Regeln auf. Mit Hilfe des Layout-Element-Editors kann beispielsweise vordefiniert werden, ob es sich um einen Rahmen handelt, dessen Größe und Position variabel ist oder nicht. Handelt es sich beispielsweise um einen in der Größe variablen Rahmen, kann beispielsweise auch eine Maximaländerung vorgegeben werden. In dem Layout-Elemente-Editor kann hinsichtlich der Position beispielsweise auch definiert werden, ob ein Rahmen überhaupt dargestellt wird. Beispielsweise kann in Abhängigkeit eines Datenbankeintrags definiert werden, dass ein Rahmen nicht dargestellt wird, wenn in der Datenbank der über die Zuordnungsregel definierte Datensatz nicht vorhanden ist. Dies kann zu Verschiebungen der Layout-Elemente führen. Durch eine derartige Regel ist vermieden, dass die Druckelementevorlage leere Bereiche aufweist. Vorzugsweise ist für unterschiedliche Layout-Elemente, wie einem Bild und einem Textrahmen jeweils ein Layout-Elementen-Editor vorgesehen. Ein Layout-Elementen-Editor für einen Bildrahmen weist somit beispielsweise die Möglichkeit zur Vordefinition der Lage des Bildes innerhalb des Rahmens, der Skalierung des Bildes sowie die Anpassungsmöglichkeiten des Rahmens an das Bild bzw. des Bildes an den Rahmen auf. Handelt es sich um einen Layout-Elementen-Editor für einen Textrahmen, können hierin wiederum Rahmeneigenschaften vordefiniert werden. Insbesondere kann vordefiniert werden, ob der Rahmen in der Größe veränderbar ist oder nicht. Bei den Layout-Elementen-Editoren kann insbesondere vorgegeben werden, ob der entsprechende Rahmen andere Rahmen verdrängt oder nicht. Eine Verdrängung führt beispielsweise dazu, dass ein vertikaler Abstand zwischen zwei Rahmen stets eingehalten wird, auch wenn sich die Größe eines der beiden Rahmen verändert. Ferner können in den Layout-Elementen-Editoren die üblichen Einstellungen wie Umrandung, Hintergrund, Anordnung des Elements innerhalb des Rahmens, Ausstellung des Rahmens in Spalten etc. vorgenommen werden.

Vorzugsweise weist die Layout-Erstellungseinrichtung einen Datensatz-Editor zur Definition der Zuordnungs- und Anordnungsregeln auf. Mit Hilfe des Datensatz-Editors kann somit eine oder mehrere Dateien einem Rahmen, d.h. Layout-Element zugeordnet werden. Beispielsweise können einem Textrahmen mehrere Textdateien zugeordnet werden. Hierbei kann die Anordnung der einzelnen Textdateien in dem Textrahmen zueinander sowie auch die Anordnung des Textes einer Textdatei, beispielsweise durch Einsetzen von Tabulatoren etc. definiert werden.

Ferner umfasst die Layout-Erstellungseinrichtung vorzugsweise einen Basis-Editor zur Definition von Grundeinstellungen. Es handelt sich hierbei um Grundeinstellungen, die für die gesamte Druckvorlage gelten sollen. Beispielsweise handelt es sich hierbei um Regeln wie der Festlegung der Rasterweite.

Mit Hilfe der erfindungsgemäßen Datenverarbeitungsvorrichtung zur Erstellung von Druckvorlage kann somit auf vereinfachte Weise eine Druckvorlage, insbesondere für Kataloge und Prospekte erstellt werden. Die wesentlichen Schritte bei Erstellen der Druckvorlage sind das Definieren mindestens einer Layout-Elementengruppe. Dies erfolgt durch Definieren der Lage einzelner Layout-Elemente. Vorzugsweise wird hier bereits eine Anfangsgröße entsprechenden Layout-Elements vorgegeben. Anschließend werden für jedes Layout-Element Zuordnungsregeln definiert, durch die ein Layout-Element mit einem Datensatz verknüpft wird. Die in einer Speichereinrichtung, wie einer Datenbank gespeicherten Datensätze werden in einem nächsten Schritt sodann automatisch aus der Datenbank ausgelesen und in das Drucklayout eingefügt. Das Verfahren zur Erstellung der Druckvorlage kann durch das Vorsehen der hierin beschriebenen Einrichtungen und Editoren der Datenverarbeitungseinrichtung beziehungsweise durch deren Funktionen vorteilhaft weitergebildet werden.

Ferner betrifft die Erfindung einen Datenträger, auf dem ein Computerprogramm gespeichert ist. Das Computerprogramm ist derart ausgebildet, dass ein herkömmlicher Computer, der ggf. mit einer externen Datenbank verbunden ist, gemäß der erfindungsgemäßen Datenverarbeitungseinrichtung verwendet werden kann.

Nachfolgend wird die Erfindung anhand einer bevorzugten Ausführungsform unter Bezugnahme auf die anliegenden Zeichnungen näher erläutert.

Es zeigen:
- Fig. 1: einen schematischen Aufbau der erfindungsgemäßen Datenverarbeitungseinrichtung,
- Fig. 2: eine Eingabemaske eines Basiseditors,
- Fig. 3: eine Eingabemaske eines Layout-Elementengruppe-Editors,
- Fig. 4: eine Eingabemaske für einen Layout-Editor und einen ZuordnungsEditor für Bildrahmen,
- Fig. 5: eine Eingabemaske eines Layout-Editors für Textrahmen, und
- Fign. 6 bis 10: Eingabemasken des Datensatz-Editors.

Eine Layout-Erstellungseinrichtung 10 dient zur Erstellung eines Drucklayouts 12. Das seitenunabhängige Drucklayout 12, bei dem es sich somit quasi um eine "Endlosseite" handelt, weist mehrere Layout-Elementgruppen 14 auf. Jede Layout-Elementgruppe weist mehrere Layout-Elemente 16,18 auf, wobei es sich bei den Layout-Elementen 16 um Bildrahmen und bei den Layout-Elementen 18 um Textrahmen handelt. Die einzelnen Layout-Elemente 16,18 sind innerhalb einer Layout-Elementgruppe 14 in relativen Positionen zueinander angeordnet. Die Lage der einzelnen Layout-Elementgruppen 14 zueinander ist ebenfalls definiert. In Abhängigkeit nachstehend beschriebener Regeln kann sich die Größe einzelner Layout-Elemente 16,18 sowie die Größe einer Layout-Elementgruppe 14 ändern. Dies kann zum Verschieben der Layout-Elementgruppen 14 innerhalb des Drucklayouts 12 führen.

Mit Hilfe einer Verknüpfungseinrichtung 20 erfolgt ein Verknüpfen der einzelnen Layout-Elemente 16,18 des Drucklayouts 12 mit einer Datenbank 22, in der eine Vielzahl von Datensätzen 24 gespeichert ist. Die Zuordnung mit Hilfe der Verknüpfungseinrichtung 20 erfolgt derart, dass jedes Layout-Element 16,18 eine Zuordnungsregel aufweist, in der der entsprechende Datensatz 24 definiert ist. Der Datensatz 24 kann unmittelbar in der Datenbank 22 gespeichert sein oder die Datenbank 22 weist einen Verweis auf eine andere Speichereinrichtung auf, in der der Datensatz 24 gespeichert ist. Die Verknüpfungseinrichtung 20 liest somit für jedes einzelne Layout-Element 16,18 den zugehörigen Datensatz 24 aus der Datenbank 22 und verknüpft diese.

Ferner ist jedem Layout-Element 16,18 eine Anordnungsregel unmittelbar zugeordnet. Die Anordnungsregel weist beispielsweise Regeln über die Anordnung eines Text oder Bildelements in einem Layout-Element 16,18 sowie deren typographische Ausgestaltung auf. Unter Beachtung dieser Anordnungsregel wird von der Verknüpfungseinrichtung 20 der Datensatz 24 in das Drucklayout 12 eingefügt, so dass eine Druckvorlage 26 entsteht. Die Druckvorlage ist seitenbezogen, so dass von der Verknüpfungseinrichtung 20 zusätzlich beispielsweise hinsichtlich der Layout-Elementgruppen 14 definierte Regeln berücksichtigt werden. Bei diesen Regeln kann es sich beispielsweise um Regeln handeln, dass eine Layout-Elementgruppe nicht auf zwei unterschiedlichen Seiten angeordnet sein darf, d.h. ein Aufteilen der Layout-Elementgruppen nicht zulässig ist.

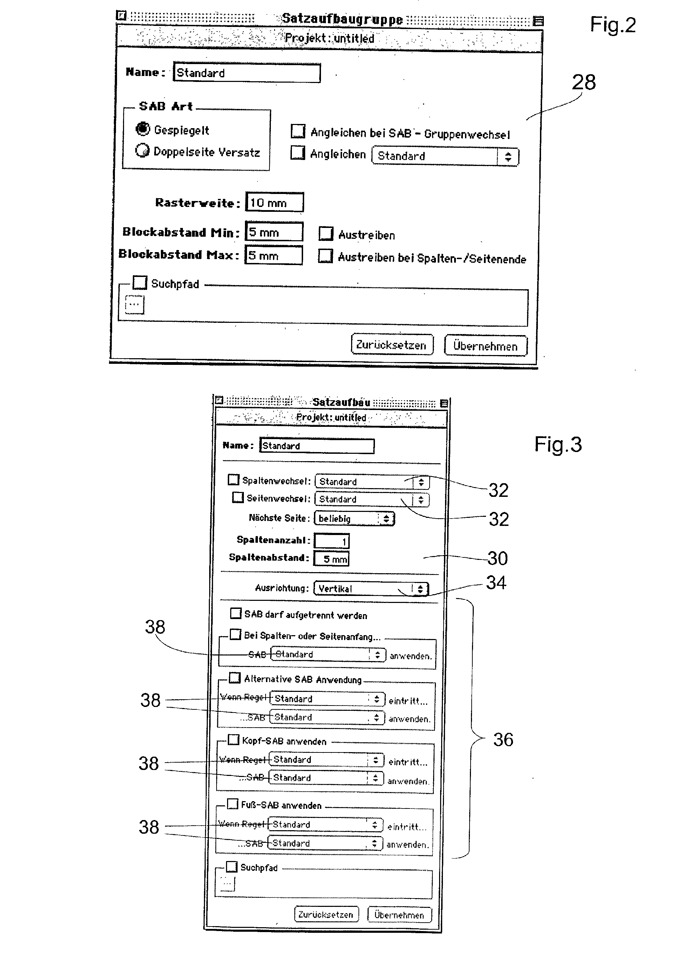

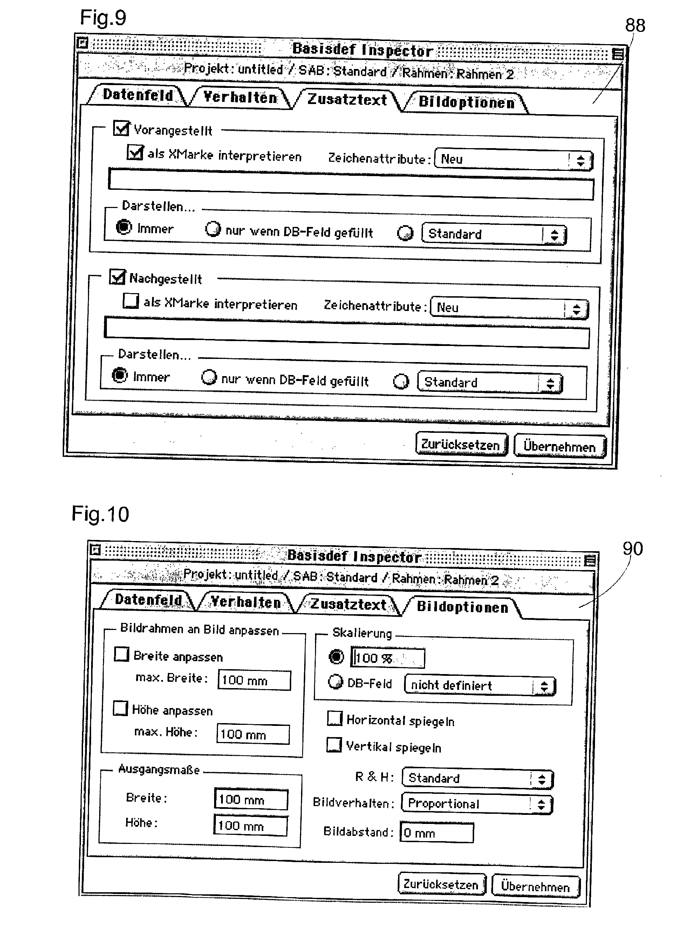

Nachfolgend wird anhand der Fign. 2 bis 10 anhand der dargestellten Auswahl an Eingabemasken das grundlegende erfindungsgemäße Verfahren zum Erstellen einer Druckvorlage sowie die einzelnen Editoren o.dgl. der erfindungsgemäßen Datenverarbeitungseinrichtung näher erläutert. In der nachfolgenden Beschreibung werden die wesentlichen Bestandteile der einzelnen dargestellten Eingabemasken beschrieben.

Vor dem Öffnen eines Basiseditors 28 (Fig. 2) erfolgt vorzugsweise eine Verbindung des Programms zur Erstellung der Druckvorlage mit der Datenbank 22. Beispielsweise wird die Datenbank 22 eingelesen. Anschließend werden grundlegende Stildaten definiert. Hierbei handelt es sich beispielsweise um Voreinstellungen hinsichtlich der Schriftart, genereller Absatzabstände, Farbgebungen sowie ggf. der Definition unterschiedlicher Regeln. Dieses Definieren der Stildaten kann auch innerhalb des Basiseditors 28 erfolgen. Der hier dargestellte Basiseditor weist die beiden unterschiedlichen Satzaufbau-Arten gespiegelt und ein doppelseitiger Versatz auf. Bei der Satzauf- (SAB) Art "gespiegelt" handelt es sich um einen Satzaufbau einer doppelseitigen Druckvorlage. Hierbei erfolgt eine Spiegelung der einzelnen Layout-Elemente 16,18 an einer Mittelkante, dem späteren Falz der Doppelseite. Beispielsweise sind somit bei einem Katalog, dessen Layout-Elementengruppe aus einem Textund einem Bildrahmen besteht, die Bildrahmen stets innen an der Seite, d.h. am Falz und die Textrahmen außen angeordnet. Die SAB-Art "doppelseitiger Versatz" bedeutet, dass bei einer Doppelseite auf der einen Seite ein Bild und auf der anderen Seite ein Text angeordnet ist. Sofern die Größe der Textdatei nun eine Seite überschreitet, wird diese auf der nächsten Seite weitergeführt. Die nächste Seite ist hierbei beispielsweise wiederum die rechte Seite eines doppelseitigen Katalogs. Auf der linken Seite wird in diesem Fall jeweils das gleiche Bild, auf das sich der Text bezieht, eingefügt.

Ferner ist in dem Basis-Editor 28 eine Rasterweite einstellbar, die in dem dargestellten Ausführungsbeispiel mit 10 mm bestimmt ist. Bei der Rasterweite handelt es sich um ein Raster, an dem Layout-Elemente beginnen können. Durch die Eingabe eines minimalen und maximalen Blockabstands ist ferner ein Mindest- und ein Maximalabstand zwischen den Rändern eines Layout-Elements definiert.

Ein Layout-Elementengruppen-Editor 30 (Fig. 3) dient zur Definition von Regeln hinsichtlich einer Layout-Elementengruppe 14. Hierbei kann auf die Layout-Elementengruppe 14 bezogen festgelegt werden, ob ein Spaltenwechsel oder ein Seitenwechsel erfolgen soll. Diese Vorgabe erfolgt jeweils in Abhängigkeit einer über ein Feld 32 auswählbaren oder definierbaren Regel. Ferner sind Spaltenzahlen und Spaltenabstände wählbar. Über ein Feld 34 ist die Ausrichtung der Layout-Elementengruppe 14 innerhalb des Drucklayouts 12 wählbar. In dem Bereich 36 der Maske des Layout-Elementen-Editors 30 ist eine Verknüpfung mit der in dem Basis-Editor 28 definierten Satzaufbaugruppe (SAB) möglich. Dies ist wiederum über Eingabefelder 38 in Abhängigkeit definierbarer Regeln möglich. Beispielsweise ist es auch möglich, einen alternativen Satzaufbau in Abhängigkeit einer vordefinierten Regel zu verwenden. Das Erstellen der Druckvorlage ist somit äußerst flexibel, da auch unterschiedliche Satzaufbaugruppen in dem Basis-Editor 28 definiert und sodann mit Hilfe des Layout-Elementengruppen-Editors 38 einzelnen Layout-Elementengruppen 14 hinterlegt werden können.

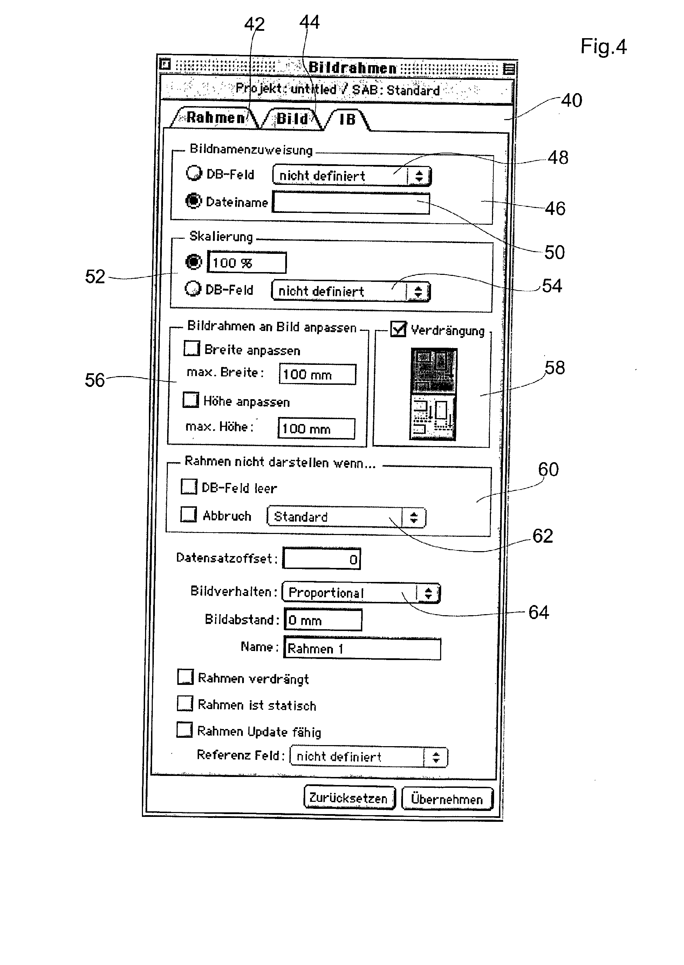

Die einzelnen Layout-Elemente 16,18 einer Layout-Elementengruppe 14 können mit Hilfe eines Layout-Elementen-Editors 40 (Fig. 4) editiert werden. Der Layout-Elementen-Editor 40 für einen Bildrahmen, d.h. ein Layout-Element 16 weist einen Eingabemaske"Rahmen" 42 sowie eine Eingabemaske"Bild" 44 die üblichen Einstellungsmöglichkeiten für ein das Bild umgebenden Rahmen sowie für das Bild selbst auf. Hierbei handelt es sich beispielsweise um die Linienstärke, in der der im Rahmen dargestellt wird oder ob bzw. welcher Teil des Rahmens dargestellt wird. Ferner können im Hintergrund Farben und ähnliches definiert werden.

Im dem dargestellten Ausführungsbeispiel ist ein Zuordnungs-Editor 46 in dem Layout-Elementen-Editor 40 integriert. Durch den Zuordnungs-Editor 46 ist eine Zuordnung des entsprechenden Layout-Elements 16 zu einem Datenbankfeld über ein Eingabefeld 48 möglich. Bezüglich des Eingabefelds 48 kann wie bekannt eine vorgegebene Regel üer ein "pall-up Menü" ausgewählt werden oder auch eine eigene Regel definiert werden. Ferner ist es möglich, über ein Eingabefeld 50 den Dateinamen unmittelbar einzugeben, um somit eine direkte Zuordnung zwischen dem Layout-Element 16 und dem Dateinamen der in der Datenbank 22 gespeicherten vorzunehmen.

Der Layout-Elementen-Editor 40 weist eine Skalierungsmöglichkeit 52 auf, in der die prozentuale Darstellungsgröße des Bildes unmittelbar definiert werden kann. Ferner ist auch eine Definition über ein Datenbankfeld möglich, wobei wiederum eine Regel über ein Feld 54 ausgewählt oder eingegeben werden kann. Ferner können in einem Feld 56 maximale Abmessungen des Bildrahmens definiert werden. In einem Feld 58 kann ausgewählt werden, ob bei Größenveränderung des Rahmens eine Verdrängung anderer Rahmen stattfindet oder nicht. Ein wesentliches Element des Layout-Editors 40 besteht in dem Feld 60, in dem eingegeben werden kann, bei welchem Kriterium ein Rahmen in der Druckvorlage 26 nicht dargestellt wird. Dies hat ggf. ein Nachrutschen anderer Rahmen zur Folge und verhindert das Vorhandensein unbedruckter Flächen in einem Katalog. Beispielsweise erfolgt die Darstellung eines Rahmens nicht, wenn in dem dazugehörigen Datenbankfeld 24 der Datenbank 22 keine Datei enthalten ist. Ebenso kann eine Abbruchsregel über ein Feld 62 eingegeben werden.

Ferner weist der Layout-Editor 40 weitere Eingabemöglichkeiten, beispielsweise hinsichtlich des Bildverhaltens in Abhängigkeit von Regeln, wie beispielsweise das Eingabefeld 64, die Eingabe des Bildabstandes sowie weitere Optionen auf.

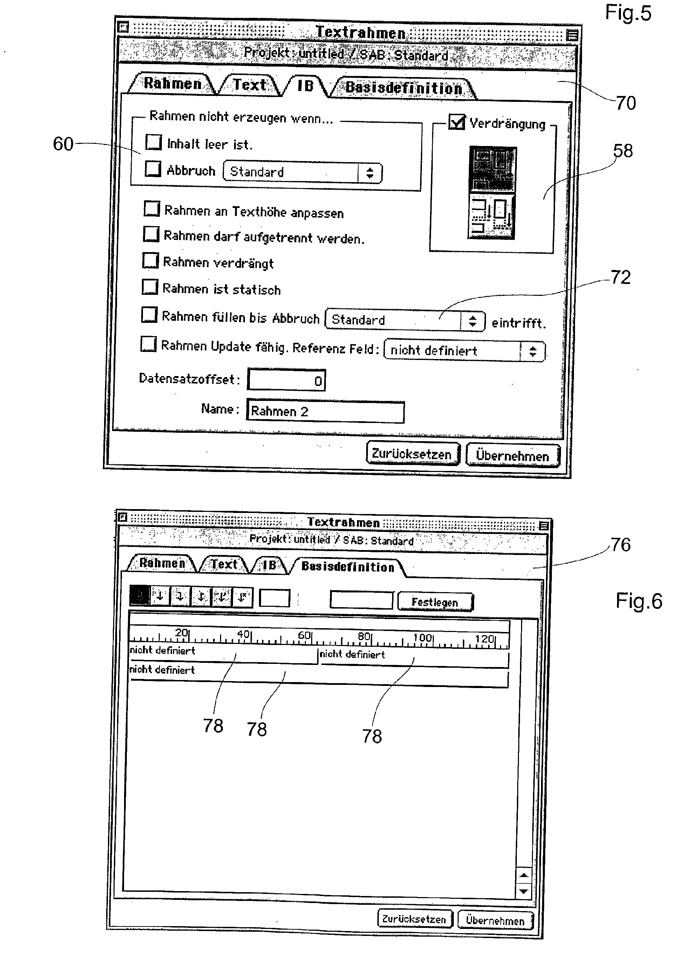

Ein Layout-Elementen-Editor 70 (Fig. 5) weist entsprechend dem Layout-Elementen-Editor 40 Definitionsmöglichkeiten hinsichtlich des Rahmen und des Textes in diesem Rahmen auf. Es handelt sich hierbei wiederum um die bekannten Definitionsmöglichkeiten hinsichtlich einzelner Rahmen, Darstellungen, deren Dicke, Hintergrund, Farben etc. In der dargestellten Maske des Layout-Elementen-Editors 70 ist entsprechend dem Layout-Elementen-Editor 40 ebenfalls die Verdrängung in einem Feld 58 sowie Regeln, wann ein Rahmen erzeugt werden soll, in einem Feld 60 möglich. Ferner weist der Layout-Elementen-Editor 70 zusätzliche Auswahlmöglichkeiten hinsichtlich des Textes und der Rahmenart, wie beispielsweise "Rahmen verdängt" oder "Rahmen ist statisch" auf. Insbesondere ist auch ein Abbruchkriterium, das in Abhängigkeit einer definierten und/oder auswählbaren Regel über das Feld 72 wählbar.

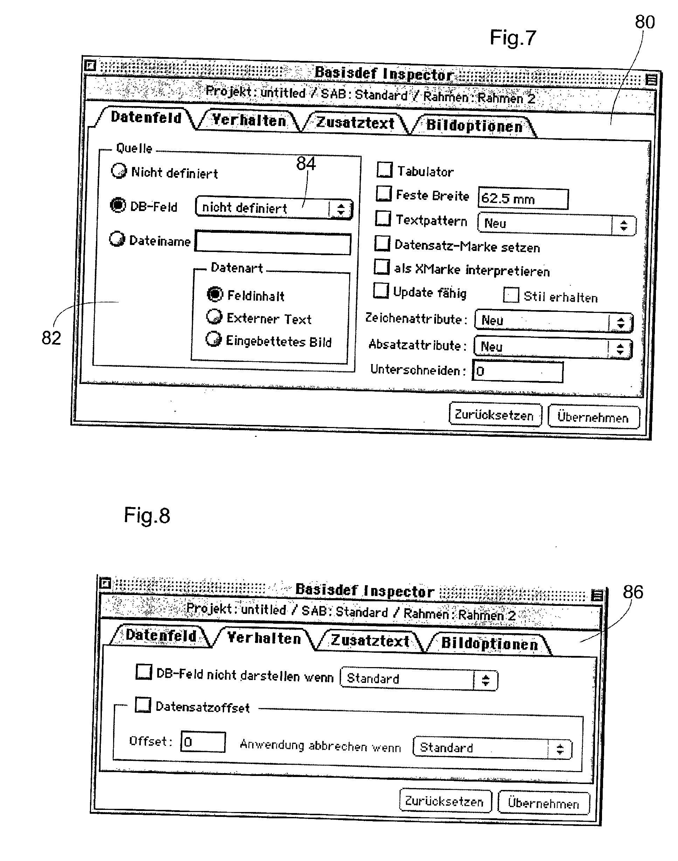

Ein Datensatz-Editor 76 dient zur Anordnung einzelner Datensätze 24 in einem Textrahmen 18. Hierbei können einzelne Texte oder auch Bilder aufweisende Datensätze 24 sowie deren Lage in dem Textrahmen definiert werden. Im dargestellten Ausführungsbeispiel sind drei Platzhalter 78 zur Anordnung von Datensätzen 24 vordefiniert. Durch Ausfall eines der vordefinierten Datensätze 78 wird eine als Basisdefinition-Inspektor (Fig. 7) bezeichnete Eingabemaske 80 des Datensatz-Editors 76 aufgerufen. In dieser kann in einem Feld 82 die Zuordnungsregel zwischen dem vordefinierten Datenfeld 78 und dem Datensatz 24 wiederum durch Eingabe oder Auswahl einer Regel über das Feld 84 oder durch Eingabe des Dateinamens erfolgen. Zusätzlich sind in der Eingabemaske 80 Anordnungsregeln definierbar, wie beispielsweise Einsetzen eines Tabulators, das Vorgeben einer festen Breite etc.

Über eine Eingabemaske 86 (Fig. 8), die ebenfalls Bestandteil des Datensatz-Editors 76 ist, kann ggf. wiederum in Abhängigkeit auswählbarer oder definierbarer Regeln das Verhalten der einzelnen Datensätze 24 festgelegt werden.

Über eine ebenfalls zum Datensatz-Editor 76 gehörende Eingabemaske 88 kann zusätzlich zu dem ausgewählten Datensatz 24 ein Zusatztext generiert werden. Dieser kann unmittelbar in der Eingabemaske definiert werden.

Die Eingabemaske 90 dient dazu, wenn es sich bei dem ausgewählten Datensatz 24 um ein Bild, wie beispielsweise ein Logo handelt, das in einen Textrahmen 18 eingefügt werden soll. Hierin sind die üblichen Eingabemöglichkeiten sowie die anhand des Layout-Elementen-Editors 40 beschriebenen Eingabemöglichkeiten vorhanden.

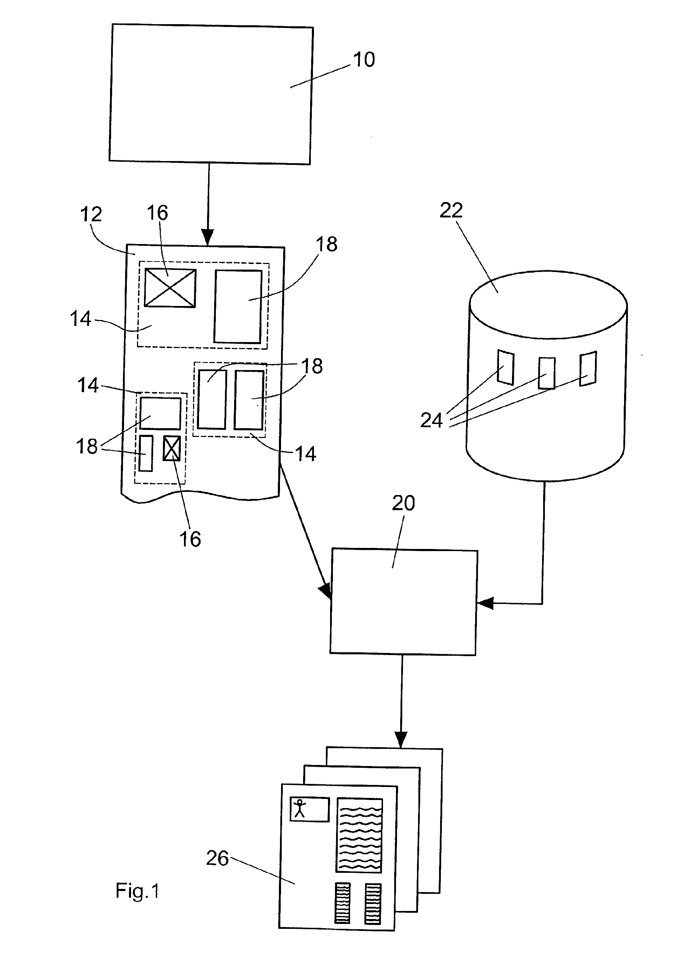

Nach Definition der vorstehend beschriebenen Regeln und Festlegen der Bedingungen und der Daten der einzelnen Layout-Elemente ist ein Drucklayout 12 erstellt. Das Einlesen der Datensätze 24 mit Hilfe der Verknüpfungseinrichtung 20 zum Erstellen der Druckvorlagen 26 (Fig. 1) erfolgt sodann automatisch. Insbesondere wenn Änderungen in der Datenbank 22, beispielsweise Aktualisierungen der Datensätze 24 vorgenommen werden, kann eine automatische neue Erstellung der Druckvorlage 26 erfolgen. Insbesondere aufgrund der hohen Flexibilität des erfindungsgemäß erstellten Drucklayouts 12 sind allenfalls geringe Nacharbeiten erforderlich. Änderungen in den Datensätzen 24 in der Datenbank 22 führen allenfalls zu Verschiebungen der einzelnen Layout-Elementgruppen 14 und/oder der einzelnen Layout-Elemente 16,18. Ein "Zerstören" des Drucklayouts 12 erfolgt nicht. Im Stand der Technik, in dem mit festen Layoutvorlagen gearbeitet wird, kann es beispielsweise erforderlich sein, neue Vorlagen zu generieren, nur weil beispielsweise in einem Textrahmen mehr Text eingefügt werden muss. Dies erfordert ein vollständiges Überarbeiten der Druckvorlage. Dies ist mit der erfindungsgemäßen Datenverarbeitungseinrichtung vermieden.

## Patentansprüche

1. Datenverarbeitungseinrichtung zur Erstellung von Druckvorlagen, mit
einer Layout-Erstellungseinrichtung (10) zur Erstellung eines mindestens eine Layout-Elementengruppe (14) enthaltenden Drucklayouts (12), wobei die mindestens eine Layout-Elementengruppe (14) mehrere Layout-Elemente (16,18) enthält, die in relativen Positionen zueinander angeordnet sind und deren Größe und/oder Position in Abhängigkeit vordefinierter Regeln variabel ist und wobei jedes Layout-Element (14,16) über eine Zuordnungsregel mit einem Datensatz (24) verknüpft ist,
einer die Datensätze (24) enthaltenden Speichereinrichtung (22), und
einer Verknüpfungseinrichtung (20) zum Erstellen der Druckvorlage (26), wobei die Verknüpfungseinrichtung (20), die den einzelnen Layout-Elementen (14,16) zugeordneten Datensätze (24) aus der Speichereinrichtung (22) ausliest und in das Drucklayout (12) einfügt.

2. Datenverarbeitungseinrichtung nach Anspruch 1, **dadurch gekennzeichnet, dass** nur das Layout-Element (14,16) die Zuordnungsregel aufweist.

3. Datenverarbeitungseinrichtung nach Anspruch 1 oder 2, **dadurch gekennzeichnet, dass** das Layout-Element (16,18) eine auf den Datensatz (24) bezogene Anordnungsregel enthält und das Einfügen des Datensatzes (24) in das Drucklayout (12) unter Beachtung der Anordnungsregel erfolgt.

4. Datenverarbeitungseinrichtung nach einem der Ansprüche 1-3, **dadurch gekennzeichnet, dass** die Größe und/oder Position der mindestens einen Layout-Elementengruppe (14) in Abhängigkeit vordefinierter Regeln variabel ist.

5. Datenverarbeitungseinrichtung nach einem der Ansprüche 1-4, **dadurch gekennzeichnet, dass** das Drucklayout (12) mehrere Layout-Elementegruppen (14) aufweist.

6. Datenverarbeitungseinrichtung nach einem der Ansprüche 1-5, **dadurch gekennzeichnet, dass** die Größe der Layout-Elementegruppen unabhängig von einer Seitengröße des Drucklayouts (12) ist.

7. Datenverarbeitungseinrichtung nach einem der Ansprüche 1-6, **dadurch gekennzeichnet, dass** die Layout-Erstellungseinrichtung (10) einen Layout-Elementengruppen-Editor (30) zur Definition der für eine Layout-Elementengruppe (14) geltenden Regeln aufweist.

8. Datenverarbeitungseinrichtung nach Anspruch 7, **dadurch gekennzeichnet, dass** der Layout-Elementengruppen-Editor (30) derart ausgebildet ist, dass für alle einer Layout-Elementengruppe (14) zugeordneten Layout-Elemente (16,18) geltende Grundregeln definierbar sind.

9. Datenverarbeitungseinrichtung nach einem der Ansprüche 1-8, **dadurch gekennzeichnet, dass** die Layout-Erstellungseinrichtung (10) einen Layout-Generator zum Erzeugen unterschiedlicher Layout-Elemente (14,16) und zur Definition der relativen Lage der Layout-Elemente (16,18) zueinander aufweist.

10. Datenverarbeitungseinrichtung nach einem der Ansprüche 1-9, **dadurch gekennzeichnet, dass** die Layout-Erstellungseinrichtung (10) einen Layout-Elementen-Editor (40,70) zur Definition der für ein Layout-Element (14,16) geltenden Regeln aufweist.

11. Datenverarbeitungseinrichtung nach Anspruch 10, **dadurch gekennzeichnet, dass** für unterschiedliche Layout-Elemente (16,18) jeweils ein Layout-Elementen-Editor (40,70) vorgesehen ist.

12. Datenverarbeitungseinrichtung nach einem der Ansprüche 1-11, **dadurch gekennzeichnet, dass** die Layout-Erstellungseinrichtung (10) einen Datensatz-Editor (76) zur Definition der Zuordnungs- und Anordnungsregel aufweist.

13. Datenverarbeitungseinrichtung nach einem der Ansprüche 1-12, **dadurch gekennzeichnet, dass** die Layout-Erstellungseinrichtung (10) einen Basis-Editor (28) zur Definition von Grundeinstellungen aufweist.

14. Datenträger mit einem Computerprogramm zur derartigen Steuerung eines Computers, dass eine Datenverarbeitungseinrichtung nach einem der Ansprüche 1-13 ausgebildet ist.
